# DEMANDE DE BREVET EUROPEEN

(11) **EP 4 568 189 A1**
(43) Date de publication de la demande: **11.06.2025**
(21) Numéro de dépôt: 24212766.0
(22) Date de dépôt: 13.11.2024
(51) Int. Cl.: H04L 12/28, H04L 43/0811, H04W 24/08

(54) **PROCÉDÉ DE DÉTECTION D'UNE PERTE DE SIGNAL D'UN RÉSEAU LOCAL ENTRE UNE PASSERELLE DOMESTIQUE ET AU MOINS UN PÉRIPHÉRIQUE, PASSERELLE DOMESTIQUE ET PRODUIT PROGRAMME D ORDINATEUR ASSOCIÉS**

(30) Priorité: 06.12.2023 FR 2313660
(71) Demandeur: SoftAtHome, 92700 Colombes (FR)
(72) Inventeur: CHAINARD, Arnaud, 94300 Vincennes (FR)
(74) Mandataire: IPAZ

(57) **Abrégé**

Procédé de détection d'une perte de signal d'un réseau local entre une passerelle domestique (10) et au moins un périphérique (1 à 9), la passerelle domestique (10) étant connectée à un réseau opérateur (WAN) via une connexion filaire et à au moins un périphérique (1 à 9) via un réseau local (LAN), le procédé comprenant les étapes suivantes :
- mesurer la qualité du signal du réseau local entre ladite passerelle domestique (10) et l'au moins un périphérique (1 à 9) à l'initialisation de la passerelle domestique (10),
- mesurer la qualité du signal du réseau local actuelle entre ladite passerelle domestique (10) et l'au moins un périphérique (1 à 9),
- calcul d'une valeur de différence de mesure entre la mesure de la qualité de signal actuelle et la mesure de la qualité du signal à l'initialisation de la passerelle domestique (10), la valeur de différence de mesure permettant de détecter si la connexion entre la passerelle domestique (10) et l'au moins un périphérique (1 à 9) est coupée.

## Description

### Domaine technique

La présente invention concerne un procédé de mesure de qualité du signal entre une passerelle domestique et au moins un périphérique. Elle concerne aussi une passerelle domestique ainsi qu'un produit programme d'ordinateur associés.

### Etat de la technique antérieure

On connaît des dispositifs et des systèmes liés à l'internet des objets (IoT), en particulier ceux utilisant des réseaux privés et des échanges radio pour la communication. Les dispositifs et les systèmes liés à l'internet des objets intègrent fréquemment des composants sensibles, tels que des verrous de porte, des détecteurs d'ouverture, des détecteurs de mouvement, des digicodes, des caméras, ainsi que des systèmes de sécurité qui reposent sur ces composants IoT par exemple.

Le risque de ce type de dispositif ou de système est qu'un brouilleur de fréquence peut potentiellement interrompre la liaison entre les divers éléments du système, par exemple entre la passerelle domestique et les capteurs/actionneurs ou encore entre un répéteur et un périphérique. Les brouilleurs de fréquence actuels peuvent également couper la connexion internet (dans le cas d'une connexion radio). Les risques associés à de telles coupures de communication sont donc nombreux, allant de la non-détection d'ouvertures ou de fermetures à l'empêchement du déclenchement d'alertes, ou encore à la non réception ou au non-enregistrement des images des caméras de surveillance par exemple.

L'invention vise donc à résoudre au moins un des problèmes cités ci-dessus par un nouveau procédé de mesure de qualité du signal entre une passerelle domestique et au moins un périphérique.

Un autre but de la présente invention est de résoudre au moins un problème de vulnérabilité d'une connexion entre une passerelle domestique et un périphérique via une nouvelle passerelle domestique.

### Exposé de l'invention

Cet objectif est atteint avec un procédé de détection d'une perte de signal d'un réseau local entre une passerelle domestique et au moins un périphérique, la passerelle domestique étant connectée à un réseau opérateur via une connexion filaire et à au moins un périphérique via un réseau local, le procédé comprenant les étapes suivantes :
- mesurer la qualité du signal du réseau local entre ladite passerelle domestique et l'au moins un périphérique à l'initialisation de la passerelle domestique,
- mesurer la qualité du signal du réseau local actuelle entre ladite passerelle domestique et l'au moins un périphérique,
- calcul d'une valeur de différence de mesure entre la mesure de la qualité de signal actuelle et la mesure de la qualité du signal à l'initialisation de la passerelle domestique (10), la valeur de différence de mesure permettant de détecter si la connexion entre la passerelle domestique (10) et l'au moins un périphérique (1 à 9) est coupée.

Dans la présente invention, la passerelle domestique qui est reliée physiquement au réseau opérateur via une connexion fibre optique ou cuivre par exemple, donc non soumis au brouillage, permet de détecter les risques de brouillage par une personne malveillante. La connexion entre la passerelle domestique et le réseau opérateur ne peut donc pas être brouillée ou coupée via ce type de dispositif puisque la connexion est filaire.

La qualité du signal entre la passerelle domestique et un périphérique du domicile de l'utilisateur est mesurée en temps réel et comparée à une mesure initiale, permettant de détecter si une connexion est coupée après une période T d'utilisation. On entend par « coupée », le fait que la qualité du signal est diminuée en partie ou complètement arrêtée ou très faible comparée à la qualité du signal à l'initialisation de la passerelle domestique. Dans ce cas, l'utilisateur peut être prévenu qu'une opération malveillante est en cours par exemple via l'utilisation d'un brouilleur de fréquence ou que le périphérique en question est en panne. On entend par « qualité du signal », une valeur correspondant à la puissance du signal émis.

Avantageusement, le procédé peut comprendre en outre une étape de comparaison de la valeur de différence de mesure avec un seuil prédéterminé, la connexion entre la passerelle domestique et l'au moins un périphérique étant coupée si la valeur de différence de mesure dépasse un seuil prédéterminé. La valeur de différence de mesure, soit l'écart entre les deux mesures, est comparée à un seuil prédéterminé. La mesure de qualité d'un signal est définie entre une valeur maximale et une valeur minimale, la valeur maximale étant définie par une réglementation par exemple la réglementation européenne. La valeur minimale correspond à la valeur en dessous de laquelle il est impossible d'émettre des données. Par exemple, pour le protocole WIFI (2,4 Ghz) la valeur maximale est de -30 db et la valeur minimale est de -67 db. Dans le cas de cet exemple, à -80 db la connexion est possible, mais les échanges de données sont impossibles et à - 90 db la connexion est impossible.

Si à l'initialisation de la passerelle domestique, la puissance du signal est située entre la valeur minimale et le maximale, le canal est considéré comme utilisable. Généralement, le gestionnaire de canal choisi le canal le plus puissant et avec la plus petite occupation (nombre de périphériques qui utilisent le canal).

Lors de l'utilisation d'un périphérique au sein du domicile de l'utilisateur, si la puissance du canal utilisé par le périphérique en question chute en dessous de la valeur minimale de celui-ci, et si le protocole supporte le changement de canal, le système essaye de sélectionner un autre canal. Si un autre canal peut être utilisé, aucune alerte n'est émise. Dans le cas contraire, c'est à dire si aucun autre canal peut être utilisé, la connexion est considérée comme coupée. Dans le cas où le protocole ne supporte pas un changement de canal, la connexion est également considérée comme coupée.

Alternativement, la connexion est considérée comme coupée si la puissance du signal d'un canal chute d'un écart significatif sans passer sous la valeur de puissance minimale. Par exemple, une chute significative correspond à une chute comprise entre -5 et -15 db. Cette plage de valeurs peut être réglable.

Avantageusement encore, le seuil prédéterminé peut être ajusté dynamiquement en fonction de l'évolution de la qualité du signal durant une période de temps T1. En effet, la qualité de signal peut être influencée par la météo ou par un objet métallique comme une voiture ou par le réseau du voisin. Il y a aussi la possibilité que les batteries du périphérique faiblissent avec le temps ou varie en fonction de la température ce qui va jouer sur la qualité de signal. L'ajustement dynamique permet donc de remédier à au moins un de ces inconvénients. De préférence, la période de temps T1 est comprise entre quinze minutes et deux heures.

Les mesures de qualité du signal du réseau local peuvent être réalisées sur au moins un parmi les protocoles suivants :
- protocoles de communication sans fil selon les normes du groupe IEEE 802.11;
- protocoles basés sur les normes du groupe IEEE 802.15.4;
- protocoles sans fil selon les normes du groupe IEEE 802.15.4;
- protocoles radio concernant la bande de fréquence de 868 MHz.

Les protocoles de communication sans fil selon les normes du groupe IEEE 802.11 concernent, de manière plus générale, le réseau WIFI. Les protocoles basés sur les normes du groupe IEEE 802.15.4 concernent, de manière plus générale, le réseau de type "Zigbee". Les protocoles sans fil selon les normes du groupe IEEE 802.15.4 concernent plus généralement le réseau de type "Thread". Et enfin, les protocoles radio concernant la bande de fréquence de 868 MHz concernent, de manière générale, le réseau de type "Zwave".

Avantageusement, les périphériques du domicile de l'utilisateur se trouve sur les fréquences appartenant à ces protocoles, par exemple, principalement la bande de fréquence 2,4Ghz.

Une alerte peut être envoyée à l'utilisateur si la connexion entre la passerelle domestique et l'au moins un périphérique est coupée. Cela permet de prévenir l'utilisateur ou directement un opérateur de sécurité qu'un problème de connexion a été identifié entre la passerelle domestique et un des périphériques du domicile de l'utilisateur.

Le procédé peut comprendre, en outre :
- communication périodique de la passerelle domestique avec l'au moins un périphérique selon une période de temps T2.
De préférence, la période de temps T2 est comprise entre 1 à 15 minutes par exemple.

Ceci permet de surveiller si la connexion d'un périphérique au réseau local disparaît totalement et de prévenir l'utilisateur ou l'opérateur de sécurité. On entend par « communication », le fait qu'une requête est envoyée à l'au moins un périphérique pour que celui-ci y réponde afin de vérifier si la communication entre les deux est effective.

De plus, afin de limiter au maximum l'impact sur la batterie de certains périphériques que peut avoir ces communications périodiques, les communications hors "communication périodique" peuvent être prises en compte. Par exemple, si le périphérique communique avec la passerelle domestique en temps normal, ces communications seront prises en compte. Si la passerelle domestique envoie des commandes, ces communications seront prises en compte. Chaque type de périphérique ne nécessitant pas le même niveau de sécurisation, cette valeur de période de temps T2 peut être réglable en fonction du périphérique ou du type/famille de périphérique.
Par exemple, un capteur d'ouverture de porte peut être vérifié plus régulièrement qu'une vanne thermostatique de radiateur. En ce qui concerne les périphériques pouvant se mettre en veille pendant une période de temps plus ou moins longue, ce qui pourrait être interprété comme un problème, la période de temps T2 est plus longue, voir non monitorée.

Suivant encore un autre aspect de l'invention, il est proposé une passerelle domestique comprenant une unité de traitement configurée pour mettre en oeuvre un procédé selon l'invention.

Suivant encore un autre aspect de l'invention, il est proposé un produit programme d'ordinateur comprenant des instructions qui, lorsque le programme est exécuté par une unité de traitement, conduisent celle-ci à mettre en oeuvre le procédé selon l'invention.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
**[****Fig. 1****]** illustre un exemple de topologie d'un système comprenant l'invention installé dans le domicile d'un utilisateur,
**[****Fig. 2****]** illustre une représentation schématique d'un exemple de passerelle domestique selon l'invention.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

De manière générale, chaque domicile est équipé d'une passerelle domestique. La passerelle domestique est placée dans le salon de l'utilisateur par exemple. La passerelle domestique est connectée à un réseau opérateur (WAN) via une connexion filaire par exemple par fibre optique ou ADSL ou fil cuivre. La passerelle domestique est également connectée à un ou plusieurs périphériques placés dans le domicile de l'utilisateur via un réseau local. La connexion des différents périphériques de la maison avec la passerelle domestique via le réseau local est soit filaire soit sans fil.

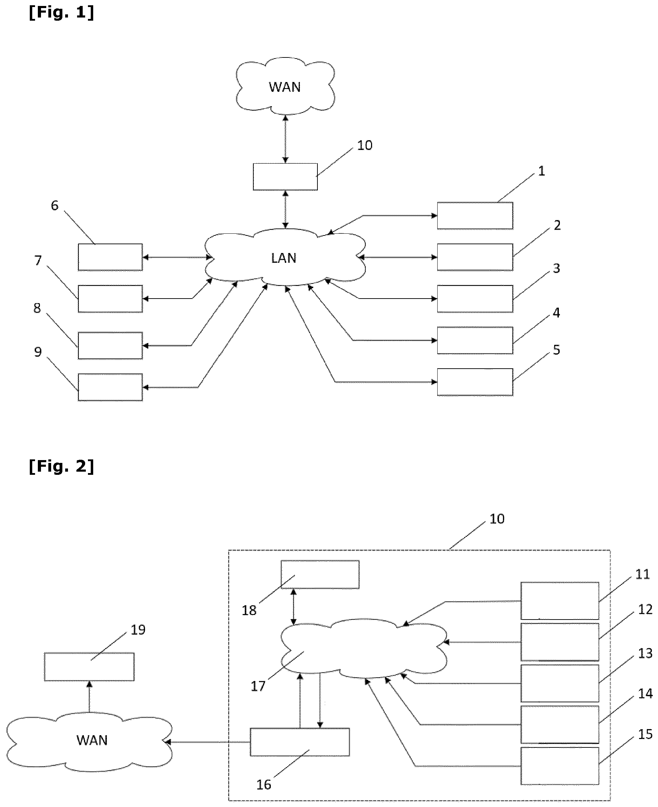

On va tout d'abord décrire, en référence à la figure 1, un exemple de topologie d'un système comprenant l'invention installé dans le domicile d'un utilisateur. Le système comprend une passerelle domestique 10 connectée à un réseau opérateur WAN de manière filaire, par exemple via de la fibre optique ou par câble ADSL. La passerelle domestique 10 est reliée à plusieurs périphériques 1 à 9 via un réseau local LAN. Les différents périphériques 1 à 9 sont positionnés dans le domicile de l'utilisateur selon son besoin. Par exemple, on trouve un bouton d'alerte 1, un capteur d'ouverture de porte 2, un verrou de porte connecté 3, un thermostat 4, un portail de voiture connecté 5, trois répéteurs 6 à 8 et une caméra connectée 9. Selon un mode de réalisation donné à titre d'exemple, les différents périphériques 1 à 5 et 8 à 9 sont connectés à la passerelle domestique 10 via le réseau local de manière sans fil sur différentes fréquences radio. Les fréquences radio sont de type Zigbee par exemple 2,4 GHz, Thread par exemple 2,4 GHz, Zwave par exemple entre 800 et 900 MHz ou WIFI par exemple 2,4 GHz ou 5 GHz ou 6 GHz. Les deux répéteurs 6 et 7 sont par exemple connectés de manière filaire via un câble Ethernet ou via une prise de courant porteur en ligne CPL. La connexion entre la passerelle domestique 10 et l'ensemble des périphériques 1 à 9 est donc hétérogène. Le procédé de détection d'une perte de signal selon l'invention est implémenté par la passerelle domestique 10 dans ce mode de réalisation mais peut également être implémenté par un dispositif externe à la passerelle domestique 10 dans d'autres modes de réalisation comme par exemple : une centrale de sécurité, un boîtier multimédia de type « set up box » STB, un routeur ou un répéteur.

Dans un premier temps, la qualité du signal du réseau local est mesurée entre la passerelle domestique 10 et les périphériques 1 à 9 installés dans le domicile à l'initialisation de la passerelle domestique 10. C'est-à-dire que lors de la première connexion ou de la première utilisation de la passerelle domestique 10, la qualité du signal du réseau local entre la passerelle domestique 10 et chaque périphérique 1 à 9 est mesurée. La mesure de qualité du signal est donc faite sur les différentes fréquences radio utilisées par les différents périphériques 1 à 9.

Dans un deuxième temps, la qualité du signal du réseau local actuelle est mesurée entre ladite passerelle domestique 10 et les périphériques 1 à 9 installés dans le domicile. La qualité du signal est alors mesurée à un instant T de l'utilisation de la passerelle, T correspondant à une période de temps d'utilisation après l'initialisation de la passerelle domestique 10.

Enfin, la mesure de la qualité de signal actuelle est comparée à la mesure de la qualité du signal à l'initialisation de la passerelle domestique 10. De préférence, la valeur de différence de mesure, soit l'écart entre les deux mesures, ne doit pas dépasser un seuil prédéterminé. L'écart dépasse le seuil prédéterminé, par exemple, si le signal de la bande de fréquence surveillée disparait totalement ou en partie ou s'il y a une dégradation importante du signal.

Optionnellement, dans le cas où, une mesure de qualité du signal entre la passerelle domestique 10 et un des périphériques 1 à 9 ne peut plus être mesurée suite à une disparition du périphérique 1 à 9 dans le système, une alarme est déclenchée que si aucun autre canal n'est disponible dans la bande de fréquence utilisée et que la perturbation persiste après une période de temps T par exemple égale à deux minutes. Cette période de temps est ajustable en fonction du besoin. En effet, une bande de fréquence donnée étant découpée en plusieurs canaux, on entend par "aucun canal disponible", le fait que, dans le cas où un périphérique utilise un des canaux de la bande de fréquence en question et qu'un autre utilisateur installe un périphérique plus puissant que le périphérique du domicile de l'utilisateur par exemple, ledit périphérique ne peut plus communiquer sur ce canal. Par conséquent, le périphérique du domicile de l'utilisateur teste le canal suivant et ainsi de suite jusqu'à ce que celui-ci en trouve un de libre pour communiquer. Une alarme est donc déclenchée si l'ensemble des canaux de la bande de fréquence utilisée est indisponible.

Si la qualité du signal entre la passerelle domestique 10 et le verrou de porte connecté 3 dépasse le seuil prédéterminé, l'utilisateur ou l'opérateur de sécurité reçoit une alerte lui indiquant qu'un potentiel risque d'intrusion ou qu'une potentielle panne du verrou a été détecté.

Selon les modes de réalisation, le seuil prédéterminé est ajusté dynamiquement en fonction de l'évolution de la qualité du signal mesuré entre la passerelle domestique 10 et un des périphériques 1 à 9 dans le temps, selon une période de temps T1 qui, par exemple, correspond à toutes les quinze minutes. Cette période de temps est ajustable en fonction du besoin.

Pour encore plus de sécurité, la passerelle domestique 10 est configurée pour communiquer périodiquement avec un ou des périphériques 1 à 9 selon une période de temps T2. En effet, la passerelle domestique 10 est configurée pour envoyer régulièrement selon la période de temps T2, une requête au périphérique 1 à 9. Le périphérique 1 à 9 est configuré pour y répondre également via une requête. Cette double vérification permet d'encore plus sécuriser le système de l'utilisateur puisque cette deuxième vérification permet de vérifier si le périphérique 1 à 9 peut toujours communiquer via le réseau local LAN avec la passerelle domestique 10. Cette fonction peut également être réalisée par un dispositif externe à la passerelle domestique 10 dans d'autres modes de réalisation comme par exemple : une centrale de sécurité, un boîtier multimédia de type « set up box » STB, un routeur ou un répéteur lorsque l'un de ces dispositifs est configuré pour implémenter le procédé selon l'invention.

Nous allons maintenant décrire, en référence à la figure 2, une représentation schématique d'un exemple de passerelle domestique selon l'invention. La passerelle domestique 10 est connectée à un réseau opérateur WAN de manière filaire, par exemple via de la fibre optique ou par câble ADSL. La passerelle domestique 10, selon un mode de réalisation, comprend un module WIFI 11, un module Zigbee 12, un module Z-Wave 13, un module Thread 14, un module Ethernet 15, un détecteur de brouilleur 16 et un bus de donnée 17. La passerelle domestique 10 peut également comprendre d'autres modules 18 selon les modes de réalisation. Ces autres modules 18 correspondent par exemple à des modules connus de ce type de système comme par exemple un module gestionnaire de règle IoT et/ou un module de gestion d'un téléviseur pour un boîtier multimédia de type « set up box ». Le détecteur de brouilleur 16 est configuré pour implémenter le procédé selon l'invention. Les différents modules 11 à 15 sont configurés pour mesurer la qualité du signal de la bande de fréquence correspondante à chacun d'entre eux. Chaque mesure de signal de chaque module est ensuite envoyée vers le bus de données 17. Le bus de données transfère l'ensemble des données reçues par les différents modules 11 à 15 vers le détecteur de brouilleur 16 qui est configuré pour les analyser et les traiter. C'est-à-dire, qu'une première mesure de la qualité du signal à l'initialisation de la passerelle domestique 10 est réalisée par les différents modules 11 à 15 entre la passerelle domestique 10 et les différents périphériques installés dans le domicile de l'utilisateur. Dans un deuxième temps, la qualité du signal du réseau local actuelle est mesurée entre ladite passerelle domestique 10 et les périphériques installés dans le domicile par les différents modules 11 à 15. Le détecteur de brouilleur 16 est configuré pour comparer les deux mesures de signal pour chaque périphérique et déterminer si la connexion entre ledit périphérique et la passerelle domestique 10 est coupée en comparant l'écart des deux mesures avec un seuil prédéterminé. Dans le cas où une connexion coupée est détectée, le détecteur de brouilleur 16 est configuré pour envoyer une alarme à un opérateur de sécurité 19 via le réseau opérateur WAN.

Typiquement au moins un des moyens du dispositif selon l'invention précédemment décrits, de préférence chacun des moyens du dispositif selon l'invention précédemment décrit sont des moyens techniques.

Typiquement, chacun des moyens du dispositif selon l'invention précédemment décrits peuvent comprendre au moins un ordinateur, une unité centrale ou de calcul et/ou un microprocesseur (de préférence dédié), et/ou des moyens logiciels.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé de détection d'une perte de signal d'un réseau local entre une passerelle domestique (10) et au moins un périphérique (1 à 9), la passerelle domestique (10) étant connectée à un réseau opérateur (WAN) via une connexion filaire et à au moins un périphérique (1 à 9) via un réseau local (LAN), le procédé comprenant les étapes suivantes :
- mesurer la qualité du signal du réseau local entre ladite passerelle domestique (10) et l'au moins un périphérique (1 à 9) à l'initialisation de la passerelle domestique (10),
- mesurer la qualité du signal du réseau local actuelle entre ladite passerelle domestique (10) et l'au moins un périphérique (1 à 9),
- calcul d'une valeur de différence de mesure entre la mesure de la qualité de signal actuelle et la mesure de la qualité du signal à l'initialisation de la passerelle domestique (10), la valeur de différence de mesure permettant de détecter si la connexion entre la passerelle domestique (10) et l'au moins un périphérique (1 à 9) est coupée.

2. Procédé de détection selon la revendication 1, le procédé comprenant en outre une étape de comparaison de la valeur de différence de mesure avec un seuil prédéterminé, la connexion entre la passerelle domestique (10) et l'au moins un périphérique (1 à 9) étant considérée comme coupée si la valeur de différence de mesure dépasse un seuil prédéterminé.

3. Procédé de détection selon la revendication 2, dans lequel le seuil prédéterminé est ajusté dynamiquement en fonction de l'évolution de la qualité du signal durant une période de temps T1.

4. Procédé de détection selon l'une quelconque des revendications précédentes, dans lequel les mesures de qualité du signal du réseau local peuvent être réalisées sur au moins un parmi les protocoles suivants :
- protocoles de communication sans fil selon les normes du groupe IEEE 802.11;
- protocoles basés sur les normes du groupe IEEE 802.15.4;
- protocoles sans fil selon les normes du groupe IEEE 802.15.4;
- protocoles radio concernant la bande de fréquence de 868 MHz.

5. Procédé de détection selon l'une quelconque des revendications précédentes, dans lequel une alerte est envoyée à l'utilisateur si la connexion entre la passerelle domestique (10) et l'au moins un périphérique (1 à 9) est coupée.

6. Procédé de détection selon l'une quelconque des revendications précédentes, comprenant, en outre :
- communication périodique de la passerelle domestique (10) avec l'au moins un périphérique (1 à 9) selon une période de temps T2.

7. Passerelle domestique comprenant une unité de traitement configurée pour mettre en oeuvre un procédé selon l'une quelconque des revendications 1 à 6.

8. Produit programme d'ordinateur comprenant des instructions qui, lorsque le programme est exécuté par une unité de traitement, conduisent celle-ci à mettre en oeuvre le procédé selon l'une quelconque des revendications 1 à 6.
